# EUROPEAN PATENT APPLICATION

(11) **EP 3 017 693 A1**
(43) Date of publication of application: **11.05.2016**
(21) Application number: 14192534.7
(22) Date of filing: 10.11.2014
(51) Int. Cl.: A01K 11/00

(54) **Ear tag**

(71) Applicant: LeeO B.V., 7004 GL Doetinchem (NL)
(72) Inventor: Van der Hoek, Arie Jan, NL-2134 GH Hoofddorp (NL)
(74) Representative: 't Jong, Bastiaan Jacob

(57) **Abstract**

The invention relates to an ear tag (1) for tagging animals, which ear tag (1) comprises:
- a housing with a first housing shell (2), a second housing shell (3) and a through hole (4) extending through both first and second housing shells;
- a mandrel plate having a back plate (6) and a mandrel (7) extending substantially perpendicular from the back plate (6), wherein the tip of the mandrel (7) has a bulge;
wherein the outer shape of the housing is plane symmetric along a symmetry plane substantially perpendicular to the longitudinal axis of the through hole.

## Description

The invention relates to an ear tag for tagging animals, which ear tag comprises:
- a housing with a first housing shell, a second housing shell and a through hole extending through both first and second housing shells;
- a mandrel plate having a back plate and a mandrel extending substantially perpendicular from the back plate, wherein the tip of the mandrel has a bulge.

Ear tags are used to track livestock from birth to death and are mandatory in most countries. Arranging of an ear tag on an ear of an animal can be done with ear tag pliers in which the housing is manually arranged on one jaw and the mandrel plate is arranged on the other jaw. Then the pliers is positioned around the ear of the animal and squeezed together, such that the mandrel is inserted through the ear of the animal into the through hole of the housing.

For applying a large number of ear tags, for example at an piggery, also devices are known in which the ear tags are automatically fed to two jaws, an ear of an animal can be inserted between the two jaws and closure of the jaws can be operated by a push of a button.

These devices typically use ear tags, which are arranged on a strip and in which the strip is fed into the device like a chain.

It is also known to use ear tags, which are provided with a transponder, such as an RFID tag, which can be read with an electronic reader. This allows one to electronically keep track of the livestock.

Ear tags provided with such a transponder typically comprises a housing with two housing shells in between the electronics are arranged. The housing shells are welded together, which typically prevents such ear tags to be provided on strips and prevents automatic, chain like feeding to a device.

It is further a legal requirement, that ear tags provided with transponders are tamper proof. When an electronic ear tag is removed from an animal it should result for example in visible damage to the ear tag. Such damage is done, when the bulge of the mandrel is pulled back through the through hole. When the bulge is pulled back, the wall of the through hole needs to be deformed, which is visible for example by whitening of the plastic.

To prevent cutting of the bulge from the mandrel and using a new mandrel plate, electronic ear tags are provided with a cap over the through hole, such that when the mandrel is cut, the bulge is maintained in the cap and insertion of a new mandrel plate is impossible.

Such electronic ear tags having a cap are difficult or even impossible to be fed to a device as the mandrel can only be inserted from one side into the housing. This requires that the housing with the cap needs to be oriented before it can be fed to the device.

It is an object of the invention to reduce or even remove the above mentioned disadvantages and preferably simplify automatic feeding of ear tags to devices for application of ear tags.

This object is achieved with an ear tag according to the preamble, which ear tag is characterized in that the outer shape of the housing is plane symmetric along a symmetry plane substantially perpendicular to the longitudinal axis of the through hole.

By having the outer shape of the housing plane symmetric along a symmetry plane substantially perpendicular to the longitudinal axis of the through hole and by having the through hole extending through both first and second housing shells, it is no longer relevant from which side the mandrel is inserted into the through hole. This simplifies feeding the housing to a device for automatic applying the ear tags, as orientation of the housing to ensure that the mandrel is inserted from the correct side into the through hole is no longer necessary.

Preferably, the first and second housing shells have an identical outer surface being arranged with the first housing shell on one side of the symmetry plane and the second housing shell on the opposite side of the symmetry plane.

In a very preferred embodiment of the ear tag according to the invention the housing is disc shaped and the through hole is arranged concentric within the disc.

Having a disc shape with the through hole concentrically arranged provides an ear tag, which can be fed to a device without any orientation. The disc will always lie with a flat side on a support surface, such that the disc can be inserted into the device without any effort. So, the ear tags can be supplied by bulk and the ear tags will always be positioned in a correct position for insertion in a device. This correct position is on any of the two flat surfaces and in any rotational position, as the through hole will always be in the center.

In a further embodiment of the ear tag according to the invention each first and second housing shell have an opening for providing the through hole and wherein restraining means are arranged in each of the openings for restraining the bulge after insertion of the mandrel into the through hole.

For example, the restraining means comprise resilient fingers or flaps extending from the circumference of the opening into the opening.

When the bulge on the tip of the mandrel is inserted into the through hole, it will at least pass one of the restraining means arranged in one of the housing shells. The restraining means will prevent the mandrel from being pulled back out of the housing without any damage.

Preferably, the bulge is somewhat cone shaped, such that passing of the restraining means in one direction will be far easier than in the other direction, which will contribute in inflicting damage to the housing, when the mandrel is pulled back.

In another preferred embodiment of the ear tag according to the invention a holding chamber is arranged in the housing between the openings in the first and second housing, for holding the bulge of the mandrel plate.

The holding chamber will keep the bulge of the mandrel contained within the housing between the openings in the first and second housing. If the mandrel would be cut, then the bulge will be retained within the housing, preventing reuse by inserting a new mandrel plate.

In further embodiment of the the ear tag according to the invention electronic means, such as an RFID-tag, are arranged in the housing.

The electronic means could easily be arranged between the two housing shells. For example the antenna coil of an RFID tag can be concentrically arranged in a disc shaped ear tag according to the invention.

These and other features of the invention will be elucidated in conjunction with the accompanying drawings.
Figure 1 shows a perspective view of a first embodiment of an ear tag according to the invention.
Figure 2 shows a cross sectional view of the embodiment of figure 1.
Figure 3 shows a cross sectional view of a second embodiment of the ear tag according to the invention.

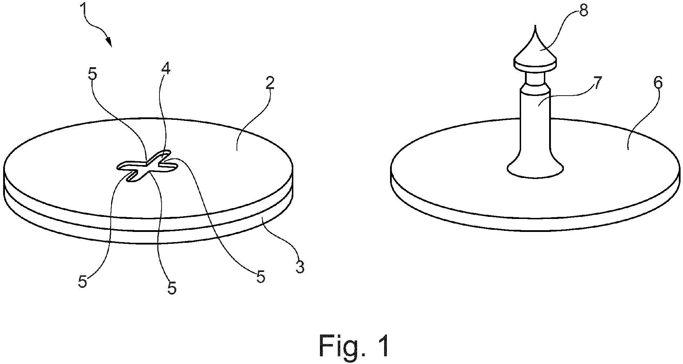

Figure 1 shows a perspective view of a first embodiment 1 of an ear tag according to the invention.

The ear tag 1 has a housing with a first housing shell 2 and a second housing shell 3. The housing 2, 3 is in this embodiment disc shaped, but could have different shapes.

A through hole 4 is furthermore provided in the housing 2, 3. The opening of the through hole 4 is bordered in each housing shell 2, 3 with resilient flaps 5.

The ear tag 1 furthermore has a mandrel plate with a back plate 6 and a mandrel 7 arranged perpendicular to the back plate 6. The tip 8 of the mandrel 7 is cone shaped.

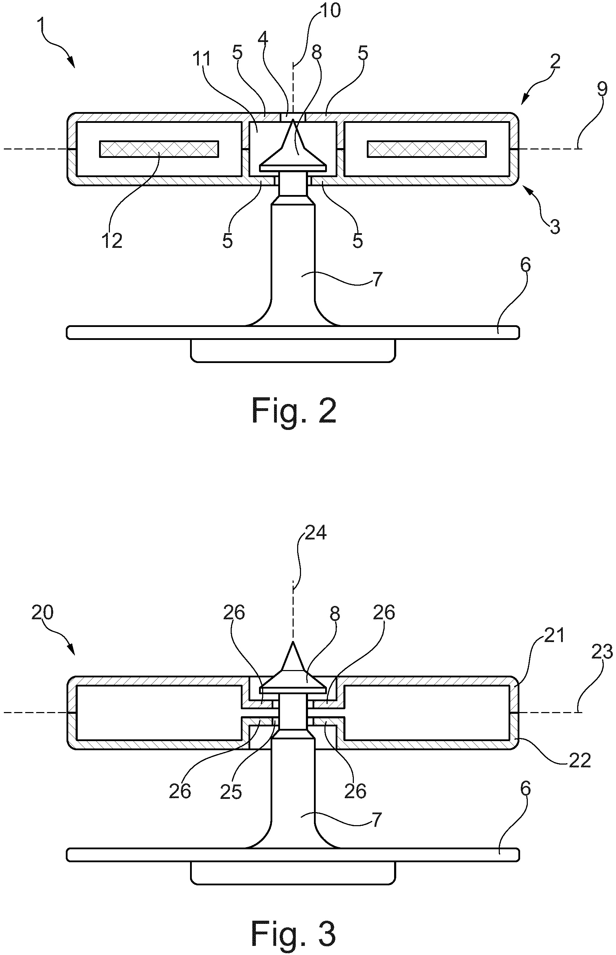

Figure 2 shows a cross sectional view of the embodiment of figure 1. The outer shape of the housing 2, 3 is plane symmetric along the symmetry plane 9, which is perpendicular to the longitudinal axis 10 of the through hole 4.

A holding chamber 11 is provided in the housing 2, 3 around the through hole 10. When the mandrel 7 is pushed into the through hole 4 with the bulge 8, the resilient flaps 5 will have been bent aside, such that the bulge 8 can enter the holding chamber 11. The resilient flaps 5 will bend back behind the bulge 8, such that the mandrel 7, 8 is retained by the housing 2, 3.

The housing 2, 3 is furthermore provided with electronic means 12, such as an RFID tag. These electronic means 12 can be arranged concentrically around the through hole 4, due to the disc shape of the housing 2, 3.

Figure 3 shows a cross sectional view of a second embodiment 20 of the ear tag according to the invention. This embodiment 20 has two housing shells 21, 22. The outer shape of the housing 21, 22 is plane symmetric along a symmetry plane 23. This plane of symmetry is perpendicular to the longitudinal axis 24 of the through hole 25.

The openings for the through hole 25 in the housing shells 21, 22 is recessed. These openings are bordered by resilient flaps 26, which prevent the bulge 8 of the mandrel plate 6, 7 to be pulled back out of the housing 21, 22.

This embodiment 20 is preferably suitable for non electronic ear tags, which need be supplied to a device for applying ear tags.

## Claims

1. Ear tag for tagging animals, which ear tag comprises:
- a housing with a first housing shell, a second housing shell and a through hole extending through both first and second housing shells;
- a mandrel plate having a back plate and a mandrel extending substantially perpendicular from the back plate, wherein the tip of the mandrel has a bulge;
**characterized in that,**
the outer shape of the housing is plane symmetric along a symmetry plane substantially perpendicular to the longitudinal axis of the through hole.

2. Ear tag according to claim 1, wherein the first and second housing shells have an identical outer surface being arranged with the first housing shell on one side of the symmetry plane and the second housing shell on the opposite side of the symmetry plane.

3. Ear tag according to claim 2, wherein the housing is disc shaped and the through hole is arranged concentric within the disc.

4. Ear tag according to any of the preceding claims, wherein each first and second housing shell have an opening for providing the through hole and wherein restraining means are arranged in each of the openings for restraining the bulge after insertion of the mandrel into the through hole.

5. Ear tag according to claim 4, wherein the restraining means comprise resilient fingers or flaps extending from the circumference of the opening into the opening.

6. Ear tag according to claim 4 or 5, wherein a holding chamber is arranged in the housing between the openings in the first and second housing, for holding the bulge of the mandrel plate.

7. Ear tag according to any of the preceding claims, wherein electronic means, such as an RFID-tag, are arranged in the housing.
